(19) **Europäisches Patentamt / European Patent Office / Office européen des brevets**

(11) **EP 4 585 510 A1**

(12) **EUROPEAN PATENT APPLICATION**

(43) Date of publication:
16.07.2025 Bulletin 2025/29

(21) Application number: 24154956.7

(22) Date of filing: 31.01.2024

(51) International Patent Classification (IPC):
**B64C 31/06** (2020.01)     **B64F 3/00** (2006.01)
**B64U 10/60** (2023.01)

(52) Cooperative Patent Classification (CPC):
**B64C 31/06; B64F 3/00; B64U 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.01.2024 PT 2024119210**

(71) Applicant: **Universidade Do Porto**
**4099-002 Porto (PT)**

(72) Inventors:
• **da Costa Castro e Fontes, Fernando Arménio**
**4200-465 PORTO (PT)**
• **de Freixo Ramos Paiva, Luís Tiago**
**4200-465 PORTO (PT)**
• **de Matos Fernandes, Manuel Côrte-Real**
**4200-465 PORTO (PT)**
• **Vinha, Sérgio Emanuel Costa**
**4200-465 PORTO (PT)**

(74) Representative: **RCF - Protecting Innovation, S.A.**
**Rua Tomás Ribeiro, nº 45-2º**
**1050-225 Lisboa (PT)**

(54) **A TETHERED AIRCRAFT BRIDLE SYSTEM, METHOD OF OPERATING THE SAME AND USE THEREOF**

(57)     The present invention relates to a tethered aircraft bridle system comprising an aircraft (02), a ground station (01), a main tether (21) and a bridle device, wherein the aircraft (02) is connected to the ground station (01) via the main tether (21) and the bridle device. The said bridle device comprises: a bridle cable having two ends, a connector (11), a wing bridle cable direction changer (12) fixed on a wing bottom surface (04) of the aircraft, a fuselage bridle cable direction changer (14) fixed at an aircraft belly, and an inner bridle cable direction changer (13), wherein both bridle cable ends are attached to the connector (11). The said connector (11) is further connected to the main tether (21). Furthermore, the said bridle cable defines a wing line (22) connecting the connector (11) to the changer (12), a connecting line (23) going through the changers (12, 13, 14), and a fuselage line (24) connecting the connector (11) to the changer (14).

The invention also refers to a method of operating the tethered aircraft bridle system and use of the same on an airborne wind energy system for the generation of electrical energy.

FIG. 1

## Description

### TECHNICAL FIELD

The present invention relates to a tethered aircraft bridle system, a method of operating the same for circular take-off, transition to tethered flight, tethered flight, and landing, as well as the use of the bridle system to control the aircraft roll angle. This invention is to be used on an Airborne Wind Energy System.

### BACKGROUND OF THE INVENTION

Airborne Wind Energy Systems (AWES) are devices that convert wind energy into electricity using autonomous flying wings attached to the ground by a tether. These devices can harvest wind energy at high altitudes, where the wind is stronger and more consistent, being able to generate electricity from a yet unexplored renewable energy resource. AWES use a much lighter infrastructure than the conventional wind turbines, since the tower and foundations are not needed and are replaced by a tether. See e.g. [Chris Vermillion, ET AL. "Electricity in the air: Insights from two decades of advanced control research and experimental flight testing of airborne wind energy systems", Annual Reviews in Control, 2021; Schmehl, Roland. "Airborne Wind Energy: Advances in Technology Development and Research", Springer Singapore, 2018] for an overview of the concepts, [Kitegen Research, "High altitude wind energy IP right ownership world overview", 2014; Mendonça, Anny Key de Souza, et al. "Comparing patent and scientific literature in airborne wind energy." Sustainability 9.6 (2017):915] for IP surveys, or [EC-DG for R&I, "Study on challenges in the commercialization of airborne wind energy systems", European Commission Directorate-General for Research and Innovation, September 2018. ISBN 978-92-79-80282-9, DOI 10.2777/87591; United States Department of Energy, "Challenges and Opportunities for Airborne Wind Energy in the United States". Report to the Congress, November 2021] for reports on challenges and opportunities.

One of the main challenges for AWES to become a viable and competitive technology, as is recognized by the research community (e.g., in the EC report [DG for R&I, "Study on challenges in the commercialization of airborne wind energy systems", European Commission Directorate-General for Research and Innovation, September 2018. ISBN 978-92-79-80282-9, DOI 10.2777/87591], in the report to the US Congress [United States Department of Energy, "Challenges and Opportunities for Airborne Wind Energy in the United States". Report to the Congress, November 2021] and in the survey [Chris Vermillion, ET AL. "Electricity in the air: Insights from two decades of advanced control research and experimental flight testing of airborne wind energy systems", Annual Reviews in Control, 2021]), is the ability to operate safely, reliably, and autonomously for long periods of time in several weather and environmental conditions. To achieve such a goal, it is crucial to develop an Automatic Take-Off and Landing (ATOL) scheme for the Tethered Aircraft (also denoted by kites).

Among the several ATOL approaches, three classes can be identified: (i) vertical TOL (VTOL) with multiple rotors, (ii) Catapult Assisted Take-Off with Barrier Arrested Recovery (CATOBAR), and (iii) circular TOL (CTOL).

The VTOL concept is currently the most popular one, pursued in the majority of companies such as Kitemill, e-Kite, Makani, TwingTec, and Skypull. It can take advantage of the considerable knowledge and resources available for multirotor drones to rapidly achieve a functioning prototype. However, the additional mass of the rotor and batteries required for VTOL operation reduces the efficiency of the system as a generator, since part of the wind energy is used to sustain the kite airborne, and reduces the capacity factor, since the cut-in wind speed is increased.

The linear take-off assisted by a catapult system, combined with a restraining system during landing (similar to CATOBAR of aircraft carriers) was recently investigated in Politecnico de Milano and ABB, and a patent on the subject [WO 2018/189252 A1] was recently granted to the Dutch company Ampyx Power.

The third concept, the circular TOL (CTOL), is the one least investigated. There is research work in Univ. Sant'Anna, Italy, using tethered motorized drones [Antonello Cherubini, "Automatic control line flight for jet-stream altitude wind power", https://www.youtube.com/watch?v=PaeCZ72ghRQ&t=55s], and by the company EnerKite, Germany, using a motorized rotating arm to lift a two-tether wing without self-propulsion [Enerkite, EK 200 technical data sheet, https://www.enerkite.de/downloads/EnerKite_200_Technical_Data_EN_SM.pd f]. In the Univ. Sant'Anna CTOL experiment, the tether has a single point of attachment to the aircraft, near the tip of one of its wings, facilitating TOL manoeuvres, but making roll control during regular flight harder. Enerkite proposes a concept with two or more tethers, independently controlled by two winches on the ground station, attached to the aircraft on the wings. A comparison of the three automatic TOL concepts is reported by Enerkite researchers in [B. Rieck et al. "Comparison of Launching & Landing Approaches". International Airborne Wind Energy Conference (AWEC 2017). 2017, Freiburg, Germany], emphasizing the advantages of CTOL in terms of high-capacity factor, ability to cope with change in wind conditions, scalability, and behaviour in case of airborne system failure.

In the previous described solutions that use CTOL, the possible range of roll angle is considerably smaller. The systems with attachment point at the wing (e.g. Univ. Sant'Anna) allow only small wings-tether angles. The systems with attachment point at the fuselage (e.g. WO 2018/189252 A1) do not allow small wings-tether angles. The systems with multiple tethers (e.g. EnerKite) can have a wider range of roll angles, but the use of multiple tethers has some disadvantages. These disadvantages are related to complexity of the ground station, as well as the increase of the aerodynamical drag, with consequent decrease of the systems efficiency as an electricity generator.

Therefore, there is the need of a system and a method allowing the automatic circular launching, transition to flight, and landing of tethered aircraft, with application to Airborne Wind Energy Systems, overcoming the above-mentioned disadvantages.

**BRIEF DESCRIPTION OF THE DRAWINGS**

The invention will now be described in further detail with reference to the accompanying drawings in which:

Figure 1: illustrates the tethered aircraft bridle system components.

Figure 2: illustrates the wings-tether angle, i.e. the angle between the wings plane and the tether line.

Figure 3: illustrates the possible tethered aircraft bridle system configurations in high-wing (3A) and low-wing (3B) aircraft.

Figure 4: illustrates the taut-wing-line mode.

Figure 5: illustrates the taut-fuselage-line mode.

Figure 6: represents a flowchart of a full operating cycle of the tethered aircraft bridle system.

Figure 7: represents a flowchart of steps 3 and 4 further detailed, when the tethered aircraft is being used in an AWES with a generator on the ground.

**SUMMARY OF THE INVENTION**

The present invention relates to a tethered aircraft bridle system comprising an aircraft (02), a ground station (01), a main tether (21) and a bridle device, wherein the aircraft (02) is connected to the ground station (01) via the main tether (21) and the bridle device, which comprises:

- a bridle cable having two ends,
- a connector (11),
- a wing bridle cable direction changer (12) fixed on a wing bottom surface (04) of the aircraft (02),
- a fuselage bridle cable direction changer (14) fixed at an aircraft belly, and
- an inner bridle cable direction changer (13) fixed inside the aircraft fuselage,

wherein both bridle cable ends are attached to the connector (11), and
the bridle cable defines a wing line (22) connecting the connector to the changer (12), a connecting line (23) going through the changers (12, 13, 14), and a fuselage line (24) connecting the connector to the changer (14);
the said connector (11) is further connected to the main tether (21); and
at least one of the changers (12, 13, 14) is a motorized pulley.

In one aspect of the present invention, two or more changers (12) are fixed on the wing bottom surface (04) of the aircraft (02), when the aircraft's centre of mass (15) is away from the wings plane.
In other aspect of the present invention, the at least one of the motorized pulleys comprises a controller.
In a further aspect, the controller comprises a driver, sensors and a control software.
The present invention also refers to a method of operating the tethered aircraft bridle system of any of the preceding claims, comprising the following steps

for taking-off and flying:

- aligning the aircraft's centre of mass (15), the changer (12) and the connector (11) with the main tether (21), with the aircraft wings parallel to the ground;
- moving the tethered aircraft circularly around the ground station (01);

- increasing the tethered aircraft speed until it reaches a take-off speed;
- increasing the tethered aircraft altitude, while performing circles around the ground station (01), combining into an ascending helicoidal motion of the aircraft (02);
- actuating on the at least one motorized pulley (12, 13, 14) keeping both lines (22, 24) taut, to control the roll angle of the aircraft (02); or
- actuating on the at least one motorized pulley (12, 13, 14) keeping one of the lines (22, 24) taut and the other of the lines (22, 24) slack, and then actuating on aileron surfaces of the aircraft to control the roll angle of the aircraft; or
- disengaging the at least one motorized pulley (12, 13, 14) and then actuating on aileron surfaces of the aircraft to control the roll angle of the aircraft; and

for landing:

- reducing the tethered aircraft altitude, while simultaneously performing circles around the ground station (01), combining into a descending helicoidal motion of the aircraft (02);
- actuating on the at least one motorized pulley (12, 13, 14) decreasing the wings-tether angle (31);
- aligning the aircraft's centre of mass (15), the changer (12) and the connector (11) with the main tether (21) and the aircraft wings parallel to the ground;
- reducing the tethered aircraft speed until the aircraft stops.

The present invention also refers to the use of the tethered aircraft bridle system on an airborne wind energy system for the generation of electrical energy.

## DETAILED DESCRIPTION OF THE INVENTION

The present invention refers to a system and a method to enable automatic circular launching (take-off), transition to tethered flight, tethered flight and landing of tethered aircraft. The system can be used with a single main tether which divides into two lines near the aircraft, forming a bridle. One line connects to the aircraft on the fuselage, the other connects to the aircraft on the wing. The relative length of each of these lines can be controlled, defining this way the aircraft roll angle.

In the context of the present invention, the expression "wing bottom surface" as used herein refers to, in normal operation of an aircraft, the part of the wing facing the ground, in opposition to the top surface.

The expression "bridle cable direction changer" as used herein refers to a mechanical means used to change the direction of the bridle cable comprised in the invention system, as well as the direction of the related forces. Examples of such changer are pulleys, low friction channels or rails or similar means. The changer can be a motorized pulley or winch.

In the present disclosure a bridle device is described which connects the aircraft (02) to the main tether (21) by two lines, the fuselage line (24) and the wing line (22), both meeting the tether at a connector (11). The differential length between the wing line (22) and the fuselage line (24) can be controlled by actuating a motorized pulley, which is at least one of the pulleys (12), (13) and (14). The said pulleys (12, 13, 14) can be embodied by a winch or similar means. The said differential length changes the geometry of the bridle polygon (formed by lines 22, 23 and 24), defining the roll angle of the aircraft (02) relative to the main tether (21). These technical characteristics are different from any other alternative bridles, or other attachment solutions, used in AWES or other applications for tethered aircraft. In particular, there is no evidence of other varying geometry bridle for rigid wing kites that has one line connecting to the wing and another connecting to the fuselage or with the geometry controlled by a winch inside the aircraft (02).

The proposed solution enables a wide range of the aircraft roll angles while using a single main tether. This is because the mechanism allows a wide range of the corresponding wings-tether angle (31), the angle between the wings plane and the tether line. The roll angles allowed can range from a small wings-tether angle (31) when the wings are parallel to the tether and horizontal (for example during circular take-off or landing); until a large wings-tether angle (31) when the wings can have a large or right angle with the tether (for example during crosswind flight).

As stated above, in the existing solutions that use CTOL, the possible range of roll angle is considerably smaller. The systems with attachment point at the wing (e.g. Univ. Sant'Anna) allow only small wings-tether angles. The systems with attachment point at the fuselage (e.g. WO 2018/189252 A1) do not allow small wings-tether angles. The systems with multiple tethers (e.g. EnerKite) can have a wider range of roll angles, but the use of multiple tethers has some disadvantages. These disadvantages are related to the complexity of the ground station, as well as to the increase of the aerodynamical drag, with consequent decrease of the systems efficiency as an electricity generator, as is detailed below.

The system and method of the present invention enable the autonomous take-off and landing (TOL) of a tethered aircraft, (i) using a circular TOL technique (CTOL), (ii) with a single tether, (iii) without compromising the manoeuvrability of the aircraft by allowing a wide range of aircraft roll angles, and (iv) having, in some situations, two independent ways to control the roll angle.

When comparing CTOL with alternative TOL techniques, the following technical advantages of the circular TOL technique can be identified:

- The TOL process can be fully automated,
- It enables use of light weight aircraft (no need to carry powerful motors and high-capacity batteries as in the case of VTOL solutions), resulting in energy systems with higher capacity factor and with higher efficiency.
- It has a reduced complexity of the ground-station module (when compared to CATOBAR solutions),
- It can be operated in several weather conditions (without wind, with rapid changing winds, gusts, or turbulence),
- It is deployable in small areas,
- It enables the use multiple-kite with single-tether systems,
- It is a scalable technology in terms of the number of units and in terms of the size of each unit.

The use of a single tether is of a considerable advantage in terms of efficiency of the system as an electricity generator. The use of more than one tether increases the overall weight of the system, increases the complexity of the ground winch- and -generator module (requiring two winches with independent control), and most importantly, significantly increases the aerodynamic drag coefficient ($C_d$) of the kite module (especially when flying at high altitudes using long tethers).

Since the mechanical power that can be extracted from a kite flying crosswind is an inverse proportion of the square of $C_d$ ($P\_max \sim 1/C_d^2$) (see e.g. [Loyd, M. L. (1980). Crosswind kite power (for large-scale wind power production) Journal of energy, 4(3), 106-111]), the maximum power is attained using devices with small $C_d$ and therefore with a single tether.

It is important for a tethered aircraft to have different roll angles, for different tether positions, so that it can transition between several flight modes (take-off, loiter, crosswind, retrieving, and landing). The need to have roll angles such that the angle between the tether line and the wings plane is small is especially relevant in CTOL, during take-off and landing manoeuvres.

In solutions with attachment points at the wing, such small angles can be easily achieved. As the attachment point and the centre of mass of the aircraft tend to align with the tether, the wings plane and the tether tend to become parallel, facilitating circular take-off and landing manoeuvres. However, it is difficult to control the roll angle to put the wings plane having a high angle with the tether.

Conversely, in solutions with attachment point at the aircraft belly, it is easy to control the roll angle when the wings plane is orthogonal or at a high angle to the tether line, as is the case during the crosswind flight used in the production cycle of AWES. Such control of the roll angle is achieved by actuating on the aileron surfaces, as is done in standard airplanes. However, it is difficult to achieve small angles since, when there is tension on the tether, the attachment point and the centre of mass of the aircraft tend to align with the tether, making the wings plane roll towards becoming orthogonal to the tether line.

In tethered aircraft with the bridle system proposed here, the best of the two solutions can be achieved. Circular take-off and landing manoeuvres can be done with a small angle between the wings plane and the tether by having a taut wing line and slack fuselage line. Loiter or crosswind flight can be done with higher angles between the wings plane and the tether.

In addition, with the bridle system of the invention we can have two independent ways to control the roll angle. When both the fuselage line (24) and wing line (22) taut (winch-controlled-roll mode), the roll angle can be controlled by actuating on the motorized pulley, which is one of the pulleys (12, 13, 14), changing the geometry of the bridle, and therefore defining the wing-tether angle (31). Alternatively, when unlocking the winch or having the fuselage line (24) taut and the wing line (22) slack, the roll angle can be controlled by actuating on the ailerons.

This redundant way in which the roll angle can be controlled (either by the bridle geometry or by the ailerons) is an added advantage, in terms of resilience of the bridle system.

Therefore, the proposed invention relates to a bridle system that connects the main tether (21) to the aircraft (02), and a method to operate it, such that the aircraft roll angle can attain the values required for several manoeuvres (take-off, landing, controlled flight, as well as AWE pumping kite manoeuvres of crosswind flight and retraction).

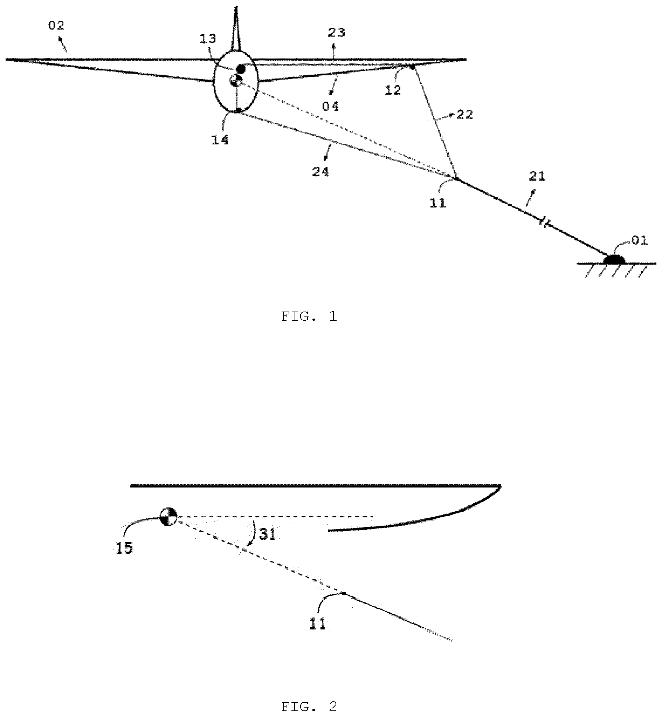

A preferred embodiment of the tethered aircraft bridle system is represented in Figure 1, where the aircraft (02) is connected to a ground station (01) via a main tether (21) and a bridle device, which comprises:

- a bridle cable having two ends;
- a connector (11) - which connects both bridle cable ends and the main tether (21);
- a wing bridle cable direction changer (12) - a changer fixed at the bottom surface (04) of a wing of the aircraft (02);
- an inner bridle cable direction changer (13) fixed inside the aircraft fuselage; and
- a fuselage bridle cable direction changer (14) - a changer fixed at an aircraft belly.

The bridle cable defines a wing line (22) connecting the connector (11) to the wing changer (12), a connecting line (23) going through the changers (12, 13, 14), and a fuselage line (24) connecting the connector (11) to the fuselage changer (14). The main tether (21) connects the connector (11) and the ground station (01).

At least one of the changers (12, 13, 14) is a motorized pulley and in a preferred embodiment of the invention, the motorized pulley is the inner bridle cable direction changer (13). In another preferred embodiment, the referred motorized pulley is a winch and the winch additionally comprises a winch controller, which comprises a driver, sensors and a control software.

It is also important to define the following:

• Centre of mass of the aircraft (15); and

• Wing-tether angle (31) - the angle between the wings plane and the tether line (Figure 2).

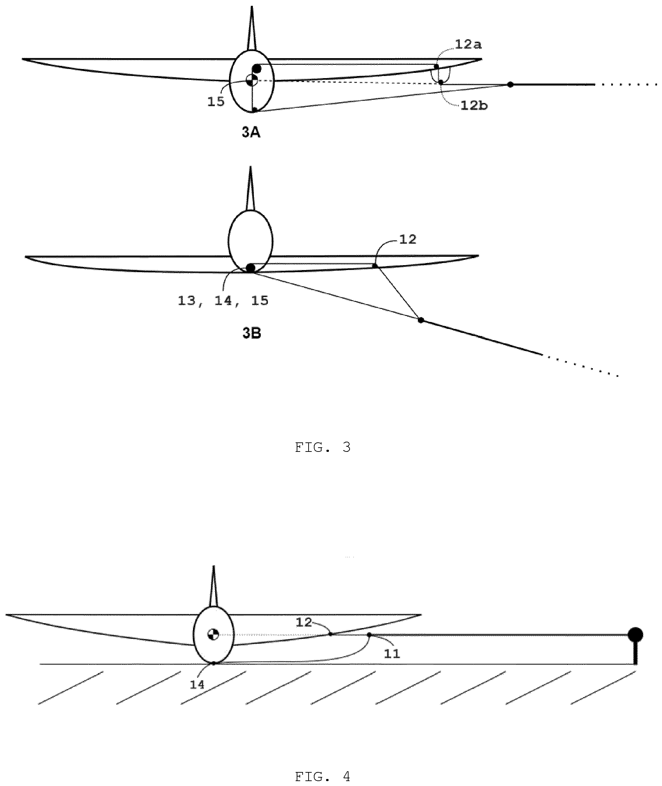

The bridle system of the invention comprises a cable that goes through the interior of the aircraft (02) and the two extremes of the cable connect to the main tether (21) at the connector (11). The cable starts at one end from the connector (11), goes through the wing changer (12), enters the body of the aircraft, goes through the inner bridle cable direction changer (13), exits the body of the aircraft at the fuselage changer (14), and back again to the connector (11) closing the polygon-shaped bridle. In the configuration depicted such polygon is a quadrilateral, however, in some aircraft, such as low-wing aircraft, the fuselage changer (14) can coincide with the inner bridle cable direction changer (13), forming a triangular-shape bridle, instead of a quadrilateral-shape one (see Figure 3B). Also, when the centre of mass (15) is away from the wings plane (such as in high-wing aircraft) there might be the need for additional wing changers and the bridle polygon might have additional sides (see Figure 3A).

The wing changer (12) and the fuselage changer (14) are to be placed on an outside surface of the aircraft and there is some freedom on where to place them exactly. However, they should be placed on the plane orthogonal to the aircraft longitudinal (roll) axis that goes through the aircraft centre of mass (15), and additionally each one should be placed on opposite sides of the plane defined by the following two lines: one joining the connector (11) to the aircraft centre of mass (15) and the other being the aircraft longitudinal axis, intersecting each other at the aircraft centre of mass (15).

In a preferred embodiment, the wing changer (12) is fixed on a wing bottom surface (04) of the aircraft (02), and the fuselage changer (14) is fixed to the aircraft belly.

Table 1 specifies some components of the tethered aircraft bridle system and the correspondent functions.

Table 1: Functions of the components of the tethered aircraft bridle system.

| Bridle System | Functions |
|---|---|
| Bridle cable | With the two extremes attached at the connector (11), it forms the wing line (22), the fuselage line (24), and the connecting line (23). |
| Main tether (21) | It is the link between the ground-station (01) and the connector (11). |
| Continuation of table 1 | |
| Connector (11) | A three-line connector, joining the tether to the extremes of the bridle cable. A swivel mechanism may be used to prevent twisting of the main tether cables. |
| Wing bridle cable direction changer (12) | It supports the movement and change of direction of a bridle cable in its attachment at the wing. More than one changer might be needed when the centre of mass (15) is away from the wings plane (Figure 3B). |
| Fuselage bridle cable direction changer (14) | It supports the movement and change of direction of a bridle cable in its attachment at the fuselage. |
| Inner bridle cable direction changer (13) | A changer placed inside the aircraft (02), where the connecting line between changers (12) and (14) changes direction. |
| Electric Winch | At least one of the of the changers (12,13, or 14) is motorized, forming for example a winch used to modify the differential length between the wing line (22) and the fuselage line (24). |
| Winch controller | Driver, sensors, and control software to operate the winch. The sensors should detect specific terminal positions for the winch or bridle cable. |

The present invention also relates to a method of operating the tethered aircraft bridle system, which comprises four modes to control the wings-tether angle, described as follows. These modes, depend on whether each of the lines (22) or (24) are taut or restrained by the winch:

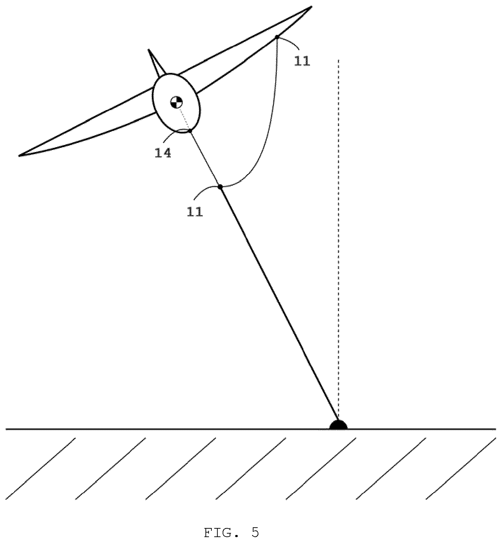

- Mode 1: winch-controlled-roll mode: both lines - wing line (22) and fuselage line (24) - are taut. In this mode, the winch controls the differential length between the wing and fuselage lines (22, 24), defining this way the wing-tether angle (31) in a wide range of values including the interval [0°,90°].
- Mode 2: taut-wing-line mode: wing line (22) is taut, fuselage line (24) is slack. In this mode, the connector (11), the wing changer (12) and the centre of mass (15), tend to become in line. If the centre of mass (15) and the wing changer (12) are at the same level, then the wing tether angle (31) is approximately zero (i.e. the wings are parallel to the tether) (see Figure 4). Small variations of this angle around zero by actuating on aileron surfaces of the aircraft might be done.
- Mode 3: taut-fuselage-line mode: fuselage line (24) is taut, wing line (22) is slack. In this mode, the connector (11), the fuselage changer (14) and the centre of mass (15), tend to become in line (see Figure 5) . By actuating on aileron surfaces of the aircraft, it is possible to control the wing-tether angle (31) in a range of values in a neighbourhood of 90 degrees.
- Mode 4: unlocked mode: The winch is disengaged, and the cable runs freely through it. The bridle adjusts to the length differential required by the current roll angle. The roll angle is controlled by the surfaces of the plane. By actuating on aileron surfaces of the aircraft, it is possible to control the wing-tether angle (31) in a range of values inside the interval [0°,90°].

The desired roll angles are attained by changing the geometry of the bridle cable, which, in turn, is achieved by changing the relative lengths of the fuselage line (24) and the wing line (22). By actuating on the winch, we can pull in the wing line (22), reducing its length, and at the same time let out the fuselage line (24), increasing its length. This will reduce the wings-tether angle (31) and change the aircraft roll angle accordingly (i.e., change the roll angle clockwise if the wing line is on the left, port, side).

Conversely, turning the winch in the other direction, will increase the wing line (22) length, reduce the fuselage line (24) length, and thereby increase the wings-tether angle (31). This is the operation in the winch-controlled-roll mode. However, if we continue to increase the length of one of the lines until it becomes slack and all the tension stays on the other line, then we enter mode 2 - taut-wing-line or mode 3 - taut-fuselage-line.

In addition, during normal flight, it might be convenient that the roll angle is not determined by the bridle geometry, but is controlled by aerodynamic forces, by actuating on the aileron surfaces, as is standard in fixed-wing aircraft. Such redundant way to control the roll angle can be achieved in the unlocked mode, when the winch is disengaged, and the relative lengths of the fuselage line (24) and the wing line (22) can freely adjust. It can also be achieved in the taut-fuselage-line mode, in situations when the wings-tether angles (31) required are near 90°.

In a preferred embodiment of the invention, the method of operating the tethered aircraft bridle system comprises the following steps:

- for taking-off and flying:

  - aligning the aircraft's centre of mass (15), the wing changer (12) and the connector (11) with the main tether (21), with the aircraft wings parallel to the ground;
  - moving the tethered aircraft circularly around the ground station (01);
  - increasing the tethered aircraft speed until it reaches a take-off speed;
  - increasing the tethered aircraft altitude, while performing circles around the ground station (01);
  - actuating on the at least one motorized pulley (12, 13, 14) keeping both lines (22, 24) taut; or
  - actuating on the at least one motorized pulley (12, 13, 14) keeping one of the lines (22, 24) taut and the other of the lines (22, 24) slack, and then actuating on aileron surfaces of the aircraft to control the roll angle of the aircraft; or
  - disengaging the at least one motorized pulley (12, 13, 14) and then actuating on aileron surfaces of the aircraft to control the roll angle of the aircraft; and

- for landing:

  - reducing the tethered aircraft altitude, while simultaneously performing circles around the ground station (01);
  - actuating on the at least one motorized pulley (12, 13, 14) decreasing the wings-tether angle (31);
  - aligning the aircraft's centre of mass (15), the wing changer (12) and the connector (11) with the main tether (21) and the aircraft wings parallel to the ground;
  - reducing the tethered aircraft speed until the aircraft stops.

The present invention also provides a method of operating the tethered aircraft bridle system and its use in an AWES to generate electricity. A full operation cycle of the system can be divided into 6 steps, listed below, together with the possible modes to accomplish them. These are also related to the known two phases of an AWES with generator on the ground: the traction phase and the retraction phase.

These six steps and a correspondence between them and the four modes in which the bridle cable can be at, are described in the table 2, below.

Table 2: Steps of the method of operating the tethered aircraft bridle system for use in an AWES and the corresponding bridle mode, depending on whether each of the lines (22) or (24) are taut.

| Step | Corresponding Bridle Mode |
|---|---|
| Step 1: Take-off | winch-controlled-roll mode (Mode 1) or taut-wing-line mode (Mode 2) |
| Step 2: Elevation | winch-controlled-roll mode (Mode 1) |
| Step 3: Winch-controlled-roll flight | winch-controlled-roll mode (Mode 1) (to be used in AWE traction phase) |
| Step 4: Aerodynamically-controlled-roll flight | taut-fuselage-line mode (Mode 3) or unlocked mode (Mode 4). (to be used in AWE retraction phase) |
| Step 5: Descent | winch-controlled-roll mode (Mode 1) |
| Step 6: Landing | taut-wing-line mode (Mode 2) |

In a full operating cycle, the tethered aircraft bridle system of the invention will go through six steps, as further described below.

For taking-off and transition to tethered flight, the method comprises the following steps:

- Step 1: Take-off - In the starting position for take-off, the aircraft (02) is on the ground, the main tether (21) and the wings are essentially parallel to the ground, the wings-tether angle (31) is zero or very small, and the centre of mass (15), the wing changer (12) and the connector (11) are aligned in a horizontal plane.
  The tethered aircraft (02) starts to move circularly in a horizontal plane, around the ground station (01), increasing speed, until it reaches the take-off speed.
- Step 2. When tethered aircraft reaches the take-off speed, it pitches up and starts to gain altitude. The motion now is a helix with vertical axis above the ground station attachment point. The wings-tether angle can be controlled using Mode 1 (winch-controlled-roll mode) or Mode 2 (taut-wing-line mode).

The aircraft (02) can then transition to any other tethered flight, constrained to the sphere with centre at the ground station attachment point and radius equal to the tether length. In the tethered flight, the wings-tether angle can be controlled using any of the modes described. Simultaneously, the tether length can be controlled using an additional winch placed at the ground station. The tethered flight can be divided into two steps according to whether the roll angle is controlled by the winch or by the aircraft aerodynamic surfaces:

- Step 3: Winch-controlled-roll flight - In this step the aircraft (02) is in normal tethered flight, both wing line (22) and fuselage line (23) are taut, and the roll angle is determined by the bridle geometry. The range of attainable wings-tether angles (31) includes the interval from zero to 90°. Mode 1- winch-controlled-roll mode is used.

- Step 4: Aerodynamically-controlled-roll - In this step, the roll angle is controlled by the aileron surfaces of the aircraft, not by the geometry of the bridle cable. The bridle device can be in either unlock mode or in taut-fuselage-line mode. When in the latter mode, the range of attainable wings-tether angles (31) is a smaller interval centred at 90°, i.e. [90° - $\delta$, 90° + $\delta$] for a small angle $\delta$.

For transition to descent and for landing, the method comprises the following steps:

- Step 5: Descent - Starting in some tethered flight, the aircraft motion changes to a circular motion with centre above the ground station. The altitude starts being reduced, and the trajectory becomes a helix. Simultaneously, the wing-tether angle is being reduced. This is done until the aircraft (02) touches the ground, when the wings are essentially horizontal and the wings-tether angle is essentially zero.
- Step 6: Landing - The aircraft (02) continues to move circularly on the ground around the ground station, while the speed is being reduced, until it stops.

The present invention also provides a method of operating the bridle system for use in an AWES to generate electricity. This method comprises two phases, the traction phase and the retraction phase, that alternate between them:

- In the traction phase, the aircraft trajectory is close to orthogonal to the wind direction, the tether length is increasing, the aerodynamical forces acting on the aircraft are such that the ground station winch is acting as a break, generating power, while preventing the main tether length increase to accelerate. In this flight, the wings-tether angle, and consequently the aircraft roll angle, can be controlled either by Mode 1 or Mode 3.
- In the retraction phase, the tether length is decreasing, the aerodynamical forces acting on the aircraft are such that the ground station winch is acting as a motor, consuming power, while guaranteeing that the main tether remains taut. In this flight, the wings-tether angle, and consequently the aircraft roll angle, can be controlled either by Mode 3 or Mode 4.

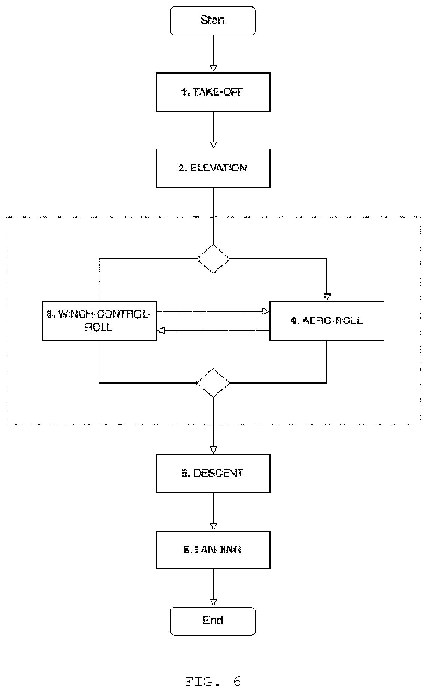

The transitions between steps 1 to 6 are depicted in the flowchart of Figure 6.

In a full operating cycle, the tethered aircraft starts at a resting position, stopped, in Step 1. It then transitions to Step 2 followed by Step 3. When in flight, it can transition back and forth several times between steps 3 and 4. When the decision to land comes, it goes through Step 5, Step 6, and finally comes to a rest.

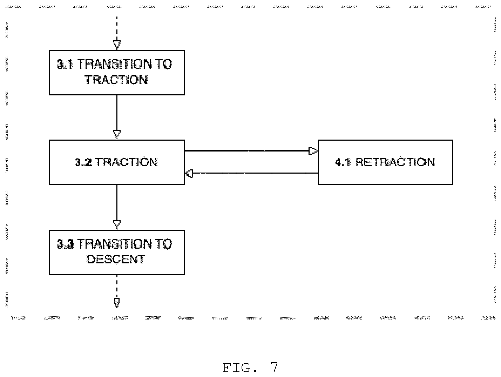

When the tethered aircraft is being used in an AWES with a generator on the ground, Steps 3 and 4 can be further detailed as indicated in the flowchart of Figure 7 and as follows:

Step 3.1: Transition to Traction - After reaching a determined altitude, the kite can proceed to transition to traction. This can either continue in the winch-controlled-roll mode or can use the taut-fuselage-line mode if the conditions allow it. This step is used to fly the plane into the wind and position it for the next step: crosswind flight.

Step 3.2: Traction phase - This step allows the kite to fly through the wind in a crosswind flight, as is done in AWES during the production phase. This flight can be done either in winch-controlled-roll mode or in the taut-fuselage-line mode.

Step 3.3: Transition to descent - After reaching a certain altitude or maximum tether length in crosswind flight, the plane should transition and prepare for descent. In this step, we want to move the plane to a point above the ground station so that in the next step, it starts flying in a helix descendent path.

Step 4.1: Retraction phase - In this step, the roll angle is controlled by the aileron surfaces of the aircraft, not by the geometry of the bridle. The bridle can be in either unlock mode or in taut-fuselage-line mode. The idea is to move towards the ground station with a minimal tether tension, so that the tether is coiled back quickly, spending just a small amount of energy.

Consequently, the proposed solution of a tethered aircraft with application to Airborne Wind Energy Systems (AWES) have the following advantages:

(i) using a circular TOL technique,
(ii) with a single tether,
(iii) without compromising the manoeuvrability of the aircraft by allowing a wide range of aircraft roll angles, and
(iv) having, in some situations, two independent ways to control the roll angle.

In particular, the use of a single tether, item (ii), can be a major advantage.

Consider for example the following scenario reported [LIND, DAMON VANDER. "ANALYSIS AND FLIGHT TEST VALIDATION OF HIGH PERFORMANCE AIRBORNE WIND TURBINES." AIRBORNE WIND ENERGY. SPRINGER, BERLIN, HEIDELBERG, 2013. 473-490], with the Makani Wing 7, an 8 m wingspan, 30 kW prototype, where the aircraft drag coefficient $C_{\_Da}$ is 0.06 and the tether drag coefficient $C_{\_Dt}$ is 0.11 using a 160 m tether length (20 times the wingspan). The total drag coefficient for this situation is $C_{\_D1}=0.17$.

Suppose that 3 tethers, instead of one are used. If the total cross section area of the tether is maintained (assuming the same maximum load), each of the 3 tethers should have a cross section with radius $R$/sqrt(3) when $R$ was the radius of the section of the previous tether. Since the drag of the tether is proportional to the radius of its cross section, then the drag of the 3 tethers is sqrt(3)=1.73 times larger, resulting in total drag of $C_{\_D3}=0.06+1.73*0.11=0.25$.

The maximum power extracted is given by

$$P = \frac{4}{27}\rho A v_w^3 (\cos\theta)^3 \frac{C_L^3}{C_D^2}$$

and is in an inverse proportion to the square of the total drag. The ratio between the maximum power with a single tether and the maximum power with three tethers is then

```
P_1/P_3= (C_D3/C_D1) ²= (0.25/0.17)²=2.16.
```

That is, the maximum power that can be extracted using a single tether is more than the double of the power that can be extracted using 3 tethers.

**Claims**

1. A tethered aircraft bridle system comprising an aircraft (02), a ground station (01), a main tether (21) and a bridle device, wherein the aircraft (02) is connected to the ground station (01) via the main tether (21) and the bridle device, **characterized in that** the bridle device comprises:

   • a bridle cable having two ends,
   • a connector (11),
   • a wing bridle cable direction changer (12) fixed on a wing bottom surface (04) of the aircraft (02),
   • a fuselage bridle cable direction changer (14) fixed at an aircraft belly, and
   • an inner bridle cable direction changer (13) fixed inside the aircraft fuselage,
   wherein both bridle cable ends are attached to the connector (11), and
   the bridle cable defines a wing line (22) connecting the connector (11) to the changer (12), a connecting line (23) going through the changers (12, 13, 14), and a fuselage line (24) connecting the connector (11) to the changer (14);
   the said connector (11) is further connected to the main tether (21); and
   at least one of the changers (12, 13, 14) is a motorized pulley.

2. The tethered aircraft bridle system according to claim 1, wherein two or more changers (12) are fixed on the wing bottom surface (04) of the aircraft (02), when the aircraft's centre of mass (15) is away from the wings plane.

3. The tethered aircraft bridle system according to claim 1 or 2, wherein the at least one of the motorized pulleys comprises a controller.

4. The tethered aircraft bridle system according to claim 3, wherein the controller comprises a driver, sensors and a control software.

5. A method of operating the tethered aircraft bridle system of any of the preceding claims, comprising the following steps

   for taking-off and flying:

   • aligning the aircraft's centre of mass (15), the changer (12) and the connector (11) with the main tether (21), with the aircraft wings parallel to the ground;
   • moving the tethered aircraft circularly around the ground station (01);
   • increasing the tethered aircraft speed until it reaches a take-off speed;
   • increasing the tethered aircraft altitude, while performing circles around the ground station (01), combining into an ascending helicoidal motion of the aircraft (02);
   • actuating on the at least one motorized pulley (12, 13, 14) keeping both lines (22, 24) taut, to control the roll angle of the aircraft (02); or
   • actuating on the at least one motorized pulley (12, 13, 14) keeping one of the lines (22, 24) taut and the other of the lines (22, 24) slack, and then actuating on aileron surfaces of the aircraft to control the roll angle of the aircraft; or
   • disengaging the at least one motorized pulley (12, 13, 14) and then actuating on aileron surfaces of the aircraft to control the roll angle of the aircraft; and

for landing:

> • reducing the tethered aircraft altitude, while simultaneously performing circles around the ground station (01), combining into a descending helicoidal motion of the aircraft (02);
> • actuating on the at least one motorized pulley (12, 13, 14) decreasing the wings-tether angle (31);
> • aligning the aircraft's centre of mass (15), the changer (12) and the connector (11) with the main tether (21) and the aircraft wings parallel to the ground;
> • reducing the tethered aircraft speed until the aircraft stops.

6. Use of the tethered aircraft bridle system, of any of claims 1 to 4, on an airborne wind energy system for the generation of electrical energy.

FIG. 1

FIG. 2

**3A**

**3B**

FIG. 3

FIG. 4

FIG. 5

FIG. 6

FIG. 7

Europäisches
Patentamt

European
Patent Office

Office européen
des brevets

## EUROPEAN SEARCH REPORT

**Application Number**

EP 24 15 4956

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/207626 A1 (BAILEY GLEN R [US]) 21 July 2016 (2016-07-21) | 1-4 | INV. B64C31/06 |
| A | * abstract; figures 1-6B * * paragraphs [0016], [0018], [0026], [0037] * | 5,6 | B64F3/00 B64U10/60 |
| A | US 9 329 096 B1 (JENSEN KENNY [US] ET AL) 3 May 2016 (2016-05-03) * abstract; figures 3A, 3B * | 1-6 | |
| A | US 10 518 876 B2 (MAKANI TECH LLC [US]) 31 December 2019 (2019-12-31) * abstract; figures 2, 4 * | 1-6 | |
| A | US 2010/026007 A1 (BEVIRT JOEBEN [US]) 4 February 2010 (2010-02-04) * abstract; figures 1-4 * | 1-6 | |

|  |
|---|
| **TECHNICAL FIELDS SEARCHED (IPC)** |
| B64C B64F B64U |

The present search report has been drawn up for all claims

| Place of search | Date of completion of the search | Examiner |
|---|---|---|
| Munich | 5 July 2024 | Podratzky, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 15 4956

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2024

| Patent document cited in search report | | Publication date | Patent family member(s) | | Publication date |
|---|---|---|---|---|---|
| US 2016207626 | A1 | 21-07-2016 | NONE | | |
| US 9329096 | B1 | 03-05-2016 | US | 9329096 B1 | 03-05-2016 |
| | | | US | 2016195443 A1 | 07-07-2016 |
| US 10518876 | B2 | 31-12-2019 | EP | 3558811 A1 | 30-10-2019 |
| | | | US | 2018170537 A1 | 21-06-2018 |
| | | | WO | 2018118192 A1 | 28-06-2018 |
| US 2010026007 | A1 | 04-02-2010 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018189252 A1

**Non-patent literature cited in the description**

- **CHRIS VERMILLION et al.** Electricity in the air: Insights from two decades of advanced control research and experimental flight testing of airborne wind energy systems. *Annual Reviews in Control*, 2021
- **SCHMEHL, ROLAND.** Airborne Wind Energy: Advances in Technology Development and Research. Springer, 2018
- High altitude wind energy IP right ownership world overview. Kitegen Research, 2014
- **MENDONÇA, ANNY KEY DE SOUZA et al.** Comparing patent and scientific literature in airborne wind energy. *Sustainability*, 2017, vol. 9.6, 915
- Study on challenges in the commercialization of airborne wind energy systems. European Commission Directorate-General for Research and Innovation, September 2018
- Challenges and Opportunities for Airborne Wind Energy in the United States. United States Department of Energy, November 2021
- **B. RIECK et al.** Comparison of Launching & Landing Approaches. *International Airborne Wind Energy Conference (AWEC 2017)*, 2017
- **LOYD, M. L.** Crosswind kite power (for large-scale wind power production). *Journal of energy*, 1980, vol. 4 (3), 106-111
- ANALYSIS AND FLIGHT TEST VALIDATION OF HIGH PERFORMANCE AIRBORNE WIND TURBINES. **LIND, DAMON VANDER**. AIRBORNE WIND ENERGY. SPRINGER, 2013, 473-490